# EUROPEAN PATENT SPECIFICATION

(11) **EP 4 080 075 B1**
(45) Date of publication and mention of the grant of the patent: **01.05.2024**
(21) Application number: 22167080.5
(22) Date of filing: 07.04.2022
(51) Int. Cl.: F16D 1/10

(54) **INNER COUPLING FOR HOLLOW SHAFT MOTOR**
INNERE KUPPLUNG FÜR HOHLWELLENMOTOR
MOTEUR À ARBRE CREUX COMPRENANT UN COUPLAGE INTÉRIEUR

(30) Priority: 23.04.2021 IT 202100010406
(43) Date of publication of application: 26.10.2022
(73) Proprietor: Melegari Luigi E Figli S.r.l., 42017 Novellara (RE) (IT)
(72) Inventor: Melegari, Silla, Novellara (RE) (IT)
(74) Representative: Lunati & Mazzoni S.r.L.

(56) References cited:
- EP-A1- 0 919 740
- WO-A1-2016/177550
- JP-A- H06 330 955

## Description

The present invention relates to a hollow shaft motor of the type specified in the preamble to the first claim.

In particular, the present invention relates to a hollow shaft motor for supplying power to pumps and thus suitable for coupling to a pump shaft.

Similar devices are described in patent applications WO 2016/177550 A1, EP 0 919 740 A1 and JP H06 330955 A.

As is well known, hollow shaft motors are a class of special electric motors having a bore that completely crosses the central axis of the motor. A hollow shaft is lighter than a conventional shaft and, at the same time, retains its torsional rigidity. Since the crankshaft transmits a rotational motion, it is continuously subjected to a torsional stress and, therefore, torsional rigidity is a fundamental characteristic of such devices. In addition, the bore of a hollow shaft allows various elements such as cables, pipes, or even lasers to pass through without obstruction.

The hollow shaft motor was developed primarily to ensure direct coupling with a pump. The pump may be, for example, hydraulic, hydraulic or other. Specifically, the hollow shaft motor reduces the overall size of the motor-pump assembly as direct coupling does not require any additional external elements. By using fewer components, overall costs are reduced.

The pump needs to be serviced periodically and then removed from the electric motor. This maintenance is often carried out years after the pump has been in use, and problems can arise when the pump is disassembled. This is because the pump's male shaft, which is inserted into the hollow shaft of the electric motor, can be difficult to release due to a layer of oxide that has formed over the years between the two elements.

To overcome this problem, hollow shaft motors have been developed which include a lantern, shorter than those traditionally available on the market, which is fitted to the front of the motor. This lantern contains an elastic coupling which couples the hollow shaft of the motor to the male shaft of the pump. This configuration can be easily disassembled, but the bellhousing still takes up space. In addition, the couplings require periodic maintenance consisting of replacement of the elastic elements.

The known technique described includes some major drawbacks.

In particular, the hollow shaft pump motors currently on the market present space problems due to the external elements used to make the motor-pump coupling.

In addition, these elements, as already mentioned, require periodic maintenance.

In this situation, the technical task underlying the present invention is to devise a hollow shaft motor capable of substantially obviating at least part of the aforementioned drawbacks.

In the context of said technical task, it is an important scope of the invention to obtain a hollow shaft motor which does not require, in order to realize the motor-pump coupling, elements defining overall dimensions external to the motor.

Another important scope of the invention is to realize a hollow shaft motor which, in case of need, can be easily disassembled from the pump.

The technical task and the specified purposes are achieved by hollow shaft motor as claimed in the annexed claim 1.

Preferred technical solutions are highlighted in the dependent claims.

The features and advantages of the invention are hereinafter clarified by the detailed description of preferred embodiments of the invention, with reference to the appended drawings, wherein:

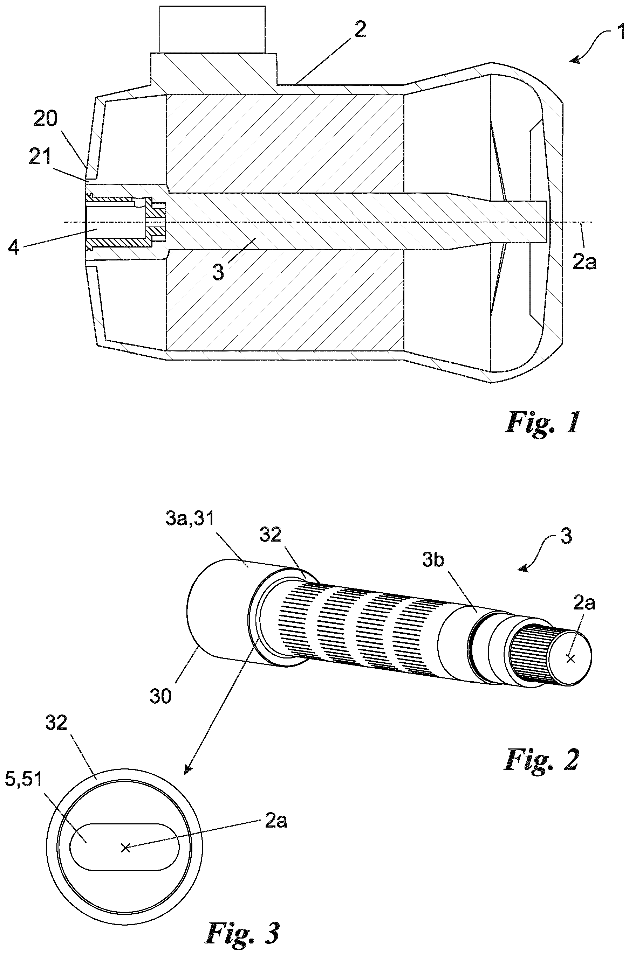

the **Fig. 1** shows a side section view of a hollow shaft motor according to the invention;
the **Fig. 2** illustrates a perspective view of the shaft of a hollow shaft motor according to the invention;
the **Fig. 3** is a detail view of the shaft coupling portion of Fig. 2;

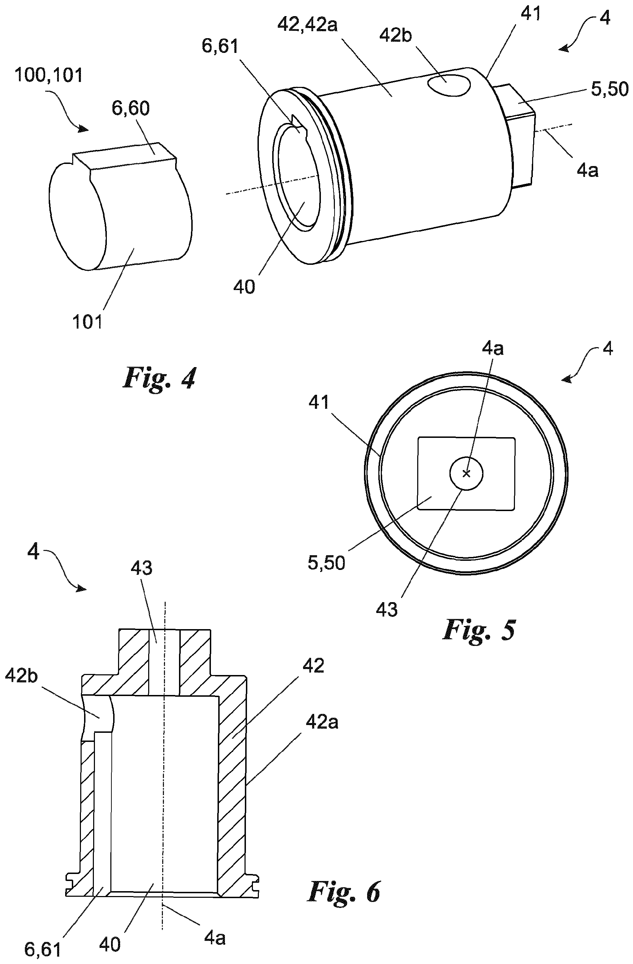

the **Fig. 4** is a perspective view of the bushing of a hollow shaft motor according to the invention.
the **Fig. 5** shows a front view in detail of the bushing housing of Fig. 4; and
the **Fig. 6** shows a side sectional view of the bushing of Figs. 4-5.

In the present document, the measurements, values, shapes and geometric references (such as perpendicularity and parallelism), when associated with words like "about" or other similar terms such as "approximately" or "substantially", are to be considered as except for measurement errors or inaccuracies due to production and/or manufacturing errors, and, above all, except for a slight divergence from the value, measurements, shape, or geometric reference with which it is associated. For instance, these terms, if associated with a value, preferably indicate a divergence of not more than 10% of the value.

Moreover, when used, terms such as "first", "second", "higher", "lower", "main" and "secondary" do not necessarily identify an order, a priority of relationship or a relative position, but can simply be used to clearly distinguish between their different components.

Unless otherwise specified, as results in the following discussions, terms such as "treatment", "computing", "determination", "calculation", or similar, refer to the action and/or processes of a computer or similar electronic calculation device that manipulates and/or transforms data represented as physical, such as electronic quantities of registers of a computer system and/or memories in, other data similarly represented as physical quantities within computer systems, registers or other storage, transmission or information displaying devices.

The measurements and data reported in this text are to be considered, unless otherwise indicated, as performed in the International Standard Atmosphere ICAO (ISO 2533:1975).

With reference to the Figures, the hollow shaft motor according to the invention is globally referred to as **1.**

The hollow shaft motor 1 is configured to be directly coupled to any pump. Or, the motor 1 may also be coupled to a specific pump **100** including certain arrangements better specified later.

In particular, therefore, the coupling between the motor 1 and the pump 100, or even any pump, defines a motor-pump assembly.

The motor 1 comprises, in brief, a main body **2,** a shaft **3** and, advantageously, a bushing **4.**

The main body 2 defines a central axis **2a.** The main body 2 may therefore have, for example, a cylindrical shape. It further comprises at least one outer face **20.** Said outer face 20 is transverse to the central axis 2a. Therefore, the outer face 20 is preferably the face against which the coupling with a pump takes place. Furthermore, the outer face 20 centrally defines an opening **21.** The opening 21 is preferably circular, but could also implement other shapes. Said opening 21 enables the motor 1 and the pump 100 to be connected.

The main body 2 internally comprises the shaft 3. The shaft 3 extends along the central axis 2a. It is rotatable around the central axis 2a with respect to the main body 2. Furthermore, the shaft 3 is generally cylindrical. In particular, the shaft 3 is put into rotation by known movement means included within the main body 2.

The shaft 3 comprises a first coupling portion **3a.** It is configured to be connected to an external shaft of any pump. Additionally, the shaft 3 includes a second coupling portion **3b.** The second coupling portion 3b is configured to be connected to the main body 2. This connection is made by means of the handling means known as previously mentioned. Both the two portions 3a and 3b are mainly developed along the central axis 2a.

The first coupling portion 3a advantageously includes a first wall **31.** In particular, the first coupling portion 3a is predominantly defined by the wall 31. Said first wall 31 develops parallel around the central axis 2a. It is preferably cylindrical. Furthermore, the first wall 31 delimits, at least in part, a cavity 30. Preferably, the wall 31 laterally delimits the cavity **30.** The cavity 30 develops mainly along the central axis 2a. It also faces the opening 21. In particular, therefore, the cavity 30 is accessible from the opening 21. The diameter of the cavity 30 may be corresponding to that of the opening 21. Furthermore, the cavity 30 may be of any shape. It is preferably cylindrical.

The first coupling portion 3a preferably further comprises a back wall **32.** The end wall 32 is transverse to the central axis 2a. Furthermore, it is opposite the opening 21. It delimits, together with the first wall 31, the cavity 30.

In any case, advantageously, said cavity 30 is configured to accommodate the bushing 4. The wall 31 is therefore configured to prevent the reciprocal translation of the bushing 4 with respect to the shaft 3 transversely to the central axis 2a.

In addition, the bushing 4 is adapted to be coupled with the first coupling portion 3a. The bushing 4 defines a prevailing expansion axis **4a.** In particular, the cavity 30 is configured to accommodate the bushing 4 such that the prevailing expansion axis 4a and the development axis 2a coincide. Furthermore, the bushing 4 is preferably entirely contained within the cavity 30 and externally faces the opening 21, when in use.

The bushing 4 additionally comprises at least one housing **40.** The housing 40 extends along the prevailing expansion axis4a. In particular, it may be of any shape. It is preferably cylindrical. The housing 40 is suitable for housing the outer shaft of any pump so as to transmit, in use, the motion of the shaft 3 to the outer shaft.

The bushing 4, in detail, preferably comprises a base wall **41.** The base wall 41 is transverse to the prevailing expansion axis 4a. Furthermore, it is opposite, in use, to the opening 21.

The bushing 4 may also comprise a coupling hole **43.**

The coupling hole 43, if present, runs along the prevailing expansion axis 4a. Furthermore, it is accessible from the housing 40. Said coupling hole 43 is advantageously threaded. The thread is intended to facilitate the extraction of the bushing 4 of the shaft 3. Such extraction may be useful in case of maintenance of the motor-pump assembly.

The bushing 4 further comprises a second wall **42.** The second wall 42 delimits the housing 40. In fact, it develops around the axis of prevalent development 4a. In particular, the second wall 42 is counter-shaped to the first wall 31. It may, moreover, be coated externally with a coating **42a.** Such coating 42a is preferably made of a non-ferrous material. In a preferred embodiment, the coating 42a is made of a polymeric material.

The second wall 42 may comprise a through hole **42b.** It, if present, extends transversely to the prevailing expansion axis 4a in the second wall 42. In particular, the through-hole 42b is suitable for arranging the housing 40 and the cavity 30 in communication when the bushing 4 is in use.

A lubrication fluid may be present between the second wall 42 and the first wall 31. The lubrication fluid allows friction between the two walls between which it is interposed to be avoided. It also enables easy removal of the bushing 4 from the cavity 30.

The motor 1 therefore advantageously comprises first constraint means **5.** The first constraint means 5 are configured to mutually constrain, at least in rotation about the central axis 2a, the shaft 3 and the bushing 4. In particular, the first constraint means 5 realise the constraint between the shaft 3 and the bushing 4 in correspondence with the central axis 2a.

According to the invention, the first constraint means substantially comprise a tooth **50** and a groove **51.** The tooth 50 is protruding along the central axis 2a. It is preferably shaped like a parallelepiped. According to the invention, the groove 51 extends, at least partially, along the central axis 2a. In particular, the groove 51 is configured to accommodate the tooth 50. Indeed, the groove 51 is at least partially counter-shaped to the tooth 50. In particular, the groove 51 has a depth preferably comparable to the dimension of the tooth 50 protruding in the direction of the central axis 2a. This constraint allows the bushing 4 to rotate, simultaneously and in solidarity with the shaft 3, around the central axis 2a. In particular, the tooth 50 may be constrained or may be part of the shaft 3 or the bushing 4. Similarly, the groove 51 may be part of the shaft 3 or the bushing 4.

According to the invention, the bushing 4 comprises the tooth 50, and the shaft 3 comprises the groove 51.

According to the invention, the tooth 50 is part of the base wall 41.

Thus, if the bushing comprises a coupling hole 43, the tooth 50 may comprise at least part of the coupling hole 43 and be substantially crossed, along the prevailing expansion axis 4a by the coupling hole 43 itself.

The groove 51 is preferably included in the first coupling portion 3a. In detail, preferably, the groove 51 is disposed on the back wall 32.

In a preferred, but not exclusive, embodiment, the motor 1 is connected to a specific pump 100. Thus, in this case, the motor 1 and the pump 100 make up the motor-pump assembly and the latter may comprise second constraint means **6.** The second constraint means 6 are configured to mutually constrain, at least in rotation about the prevailing expansion axis 4a, the bushing 4 and an outer shaft **101** of the pump 100. The outer shaft 101 is substantially the shaft through which movement is transmitted to the pump for its own operation.

The second constraint means 6, therefore, may comprise a fin **60** and a slot **61.** The fin 60 may be constrained or may be part of the bushing 4 or the outer shaft 101. The slot 61 may be part of the bushing 4 or the outer shaft 101. Preferably, the outer shaft 101 comprises the fin 60. It is protruding, when in use or when the outer shaft 101 is coupled to the bushing 4, transversely to the prevailing expansion axis 4a. Moreover, it preferably develops along the entire outer shaft 101. In contrast, the bushing 4 preferably comprises the slot 61. In particular, the slot 61 is included in the second wall 42 at the housing 40. The slot 61 extends predominantly along the wall 42 parallel to the prevailing expansion axis 4a. It further extends at least partially transversely to the prevailing expansion axis 4a. Preferably, the crack 61 is at least partially counter-shaped to the fin 60. Furthermore, the slot 61 may be accessible from the opening 21 when the bushing 4 is in use.

In particular, the slot 61 is in communication with the first wall 31 via the through-hole 42b. The lubrication fluid can therefore flow, via the through-hole 42b, along the slot 61. In this way, it advantageously allows easy removal of the fin 60 from the slot 61.

Of course, as mentioned above, it is not necessary for the motor-pump assembly to include the second constraint means 6. Indeed, the motor 1 could equally easily be constrained to any pump by other widely known means of constraint.

For example, the housing 40 could simply define a quadrangular section and the external or male shaft of any pump could be counter-shaped to the housing 40.

Or, the second constraint means 6 could be similar to the first constraint means 5. The bushing 4 could thus comprise a groove, for example on the back wall 41 facing the cavity 40. The outer shaft 101 could advantageously comprise a tooth protruding along its axis and at least partially counter-shaped to the groove present on the bushing 4.

The operation of the motor 1 described above in structural terms is as follows.

The bushing 4 is positioned inside the cavity 30 of the shaft 3. In particular, the tooth 50 is constrained, by interlocking, to the groove 51. The outer shaft of any pump can be placed inside the bushing 4. Or, in the preferred embodiment of a motor-pump assembly, the outer shaft 101 of the pump 100 is placed inside the bushing 4 so that the fin 60 is positioned at the slot 61. The pump 100 is then flanged to the outer face 20 of the main body 2 and the motor-pump assembly can be put into operation. In case of need or maintenance, the motor-pump assembly can be disassembled by repeating the procedure described in reverse order.

The motor 1 according to the invention achieves important advantages.

In fact, the motor 1 can be coupled directly to a pump without the aid of constraint means that create encumbrances external to the motor 1 itself.

The motor-pump assembly therefore has overall reduced overall dimensions compared to commercial systems.

Furthermore, thanks to the presence of the threaded coupling hole 43, the bushing 4 can be easily removed from the motor 1.

Finally, the polymeric coating 42a of the bushing 4 further facilitates the removal of the bushing 4 from the shaft 3 and reduces, or completely avoids, mutual friction.

The invention is susceptible to variations within the inventive concept as defined by the claims.

As already mentioned, the second constraint means 6 are only optional and the coupling between the external shaft of a pump and the motor 1 for the realization of a motor-pump assembly could be of any type known in the present state of the art.

In this respect, all details are substitutable by equivalent elements and the materials, shapes and dimensions may be any.

## Claims

1. Hollow shaft motor (1) comprising:
- a main body (2) defining a central axis (2a) and including an outer face (20) transverse to said central axis (2a) centrally defining an opening (21),
- a shaft (3) extending along said central axis (2a) internally to said main body (2), rotating about said central axis (2a) with respect to said main body (2) and comprising a first coupling portion (3a) configured to be connected to an external shaft of a pump and a second coupling portion (3b) configured to be connected to said main body (2),
- a bushing (4) capable of being coupled to said first coupling portion (3a), defining an prevailing expansion axis (4a) and including at least one housing (40) extending along said prevailing expansion axis (4a) and suitable for housing said external shaft in such a way as to transmit, in use, the motion of said shaft (3) to said external shaft,
- first constraint means (5) configured to reciprocally constrain at least rotationally about said central axis (2a) said shaft (3) and said bushing (4) and comprising a tooth (50) protruding along said central axis (2a) and a groove (51) extending at least partially along said central axis (2a) and configured to receive said tooth (50), said tooth (50) being constrained to, or part of, one between said shaft (3) and said bushing (4), and said groove (51) being disposed on the other between said shaft (3) and said bushing (4),
- said first coupling portion (3a) including:
- a cavity (30) facing and accessible from said opening (21), developed mainly along said central axis (2a) and configured to host said bushing (4),
- at least a first wall (31) delimiting at least part of said cavity (30) around said axis (2a) and configured to prevent reciprocal translation of said bushing (4) with respect to said shaft (3) transversely to said central axis (2a),
and said motor (1) being **characterized in that**
- said bushing (4) comprises a base wall (41) transverse to said prevailing expansion axis (4a) and comprising said tooth (50) and said shaft (3) defines a bottom wall (32) transverse to said central axis (2a), delimiting said cavity (30) with said first wall (31) and comprising said groove (51), said groove (51) being at least partially counter-shaped to said tooth (50).

2. Hollow shaft motor
(1) according to the preceding claim, wherein said bushing (4) comprises a threaded coupling hole (43), accessible from said housing (40) and extending along said prevailing expansion axis (4a).

3. Hollow shaft motor
(1) according to any one of the preceding claims, wherein said bushing (4) comprises at least a second wall (42) delimiting said housing (40) around said prevailing expansion axis (4a) and counter-shaped to said first wall (31).

4. Hollow shaft motor
(1) according to claim 3, wherein said second wall (42) is externally lined with a coating (42a) of non-ferrous metallic material.

5. Hollow shaft motor
(1) according to claim 3, wherein said second wall (42) is coated externally with a coating (42a) of polymeric material.

6. Hollow shaft motor
(1) according to claim 3, wherein said second wall (42) comprises a through-hole (42b) extending transversely to said prevailing expansion axis (4a) in said second wall (42) and suitable to place in communication said housing (40) and said cavity (30) when said bushing (4) is in use.

7. Hollow shaft motor
(1) according to claim 3, comprising a lubrication fluid interposed at least between said first wall (31) and said second wall (42).

8. Motor-pump assembly comprising a hollow shaft motor
(1) according to any preceding claim, a pump (100) including an outer shaft (101) and second constraint means (6) configured to mutually constrain at least rotationally about said prevailing expansion axis(4a) said bushing (4) and said outer shaft (101) and comprising a protruding fin (60), in use, transversely to said prevailing expansion axis(4a) and a slot (61) extending at least partially transversely to said prevailing expansion axis(4a) and configured to receive said fin (60), said fin (60) being constrained to, or part of, one between said bushing (4) and said outer shaft (101) and said slot (61) being disposed on the other between said shaft (3) and said bushing (4).

9. Motor-pump assembly according to at least claims 3 and 8, wherein said second wall (42) comprises said slot (61) and said outer shaft (101) comprising said fin (60), said slot (61) being accessible from said opening (21) when said bushing (4) is in use.

## Patentansprüche

1. Hohlwellenmotor (1) umfassend:
- ein Hauptkörper (2), der eine Zentralachse (2a) definiert und eine äußere Fläche (20) enthält, die quer zu dieser Zentralachse (2a) liegt und zentral eine Öffnung (21) definiert,
- eine Welle (3), die sich entlang dieser Zentralachse (2a) innerhalb des Hauptkörpers (2) erstreckt, die sich um diese Zentralachse (2a) bezüglich des Hauptkörpers (2) dreht und einen ersten Kupplungsabschnitt (3a) umfasst, der so konfiguriert ist, um mit einer Aussenwelle einer Pumpe verbunden zu werden sowie einen zweiten Kupplungsabschnitt (3b), der so konfiguriert ist, um mit dem Hauptkörper (2) verbunden zu werden,
- eine Buchse (4), die in der Lage ist, mit dem ersten Kupplungsabschnitt (3a) gekoppelt zu werden, die eine vorherrschende Expansionsachse (4a) definiert und mindestens ein Gehäuse (40) umfasst, das sich entlang dieser vorherrschenden Expansionsachse (4a) erstreckt und geeignet ist, diese Aussenwelle so aufzunehmen, dass sie in Gebrauch die Bewegung der Welle (3) auf diese Aussenwelle überträgt,
- erste Haltemittel (5), die so konfiguriert sind, um mindestens drehbar um diese Zentralachse (2a) die Welle (3) und die Buchse (4) gegenseitig zu halten und die einen Zahn (50) umfassen, der entlang dieser Zentralachse (2a) herausragt, und eine Nut (51), die sich zumindest teilweise entlang dieser Zentralachse (2a) erstreckt und so konfiguriert ist, um diesen Zahn (50) aufzunehmen, wobei der Zahn (50), oder Teil davon, an einer zwischen der Welle (3) und der Buchse (4) gehalten ist, und wobei die Nut (51) an der anderen zwischen der Welle (3) und der Buchse (4) angeordnet ist,
- der erste Kupplungsabschnitt (3a) umfassend:
- ein Höhlraum (30), der der Öffnung (21) gegenüberliegt und von dieser zugänglich ist, der sich hauptsächlich entlang dieser Zentralachse (2a) erstreckt und so konfiguriert ist, um die Buchse (4) aufzunehmen,
- mindestens eine erste Wand (31), die zumindest einen Teil dieses Hohlraums (30) um diese Achse (2a) begrenzt und die so konfiguriert ist, um eine gegenseitige Verschiebung der Buchse (4) bezüglich der Welle (3) quer zu dieser Zentralachse (2a) zu verhindern,
und der Motor (1) **dadurch gekennzeichnet ist, dass**
- die Buchse (4) eine Grundwand (41) umfasst, die sich quer zu dieser vorherrschenden Expansionsachse (4a) erstreckt und den Zahn (50) umfasst, und die Welle (3) eine Bodenwand (32) definiert, die sich quer zu dieser Zentralachse (2a) erstreckt, den Hohlraum (30) mit der ersten Wand (31) begrenzt und die Nut (51) umfasst, wobei die Nut (51) zumindest teilweise gegenüber dem Zahn (50) gegenförmig ist.

2. Hohlwellenmotor (1) gemäß dem vorhergehenden Anspruch, wobei die Buchse (4) eine Gewindekupplungsbohrung (43) umfasst, die von dem Gehäuse (40) zugänglich ist und sich entlang dieser vorherrschenden Expansionsachse (4a) erstreckt.

3. Hohlwellenmotor (1) gemäß einem der vorhergehenden Ansprüche, wobei die Buchse (4) mindestens eine zweite Wand (42) umfasst, die dieses Gehäuse (40) um diese vorherrschende Expansionsachse (4a) begrenzt und gegenüber der ersten Wand (31) gegenförmig ist.

4. Hohlwellenmotor (1) gemäß Anspruch 3, wobei die zweite Wand (42) außen mit einer Beschichtung (42a) aus nichteisenhaltigem Metallmaterial bedeckt ist.

5. Hohlwellenmotor (1) gemäß Anspruch 3, wobei die zweite Wand (42) außen mit einer Beschichtung (42a) aus polymerem Material beschichtet ist.

6. Hohlwellenmotor (1) gemäß Anspruch 3, wobei die zweite Wand (42) eine Durchgangsbohrung (42b) umfasst, die sich quer zu dieser vorherrschenden Expansionsachse (4a) in der zweiten Wand (42) erstreckt und die geeignet ist, das Gehäuse (40) und den Hohlraum (30) in Gebrauch miteinander zu verbinden, wenn die Buchse (4) verwendet wird.

7. Hohlwellenmotor (1) gemäß Anspruch 3, umfassend ein Schmiermittel, das zumindest zwischen der ersten Wand (31) und der zweiten Wand (42) eingeschoben ist.

8. Motor-Pumpen-Gruppe, umfassend einen Hohlwellenmotor (1) gemäß einem der vorhergehenden Ansprüche, eine Pumpe (100), die eine äußere Welle (101) umfasst, und zweite Haltemittel (6), die so konfiguriert sind, um mindestens um diese vorherrschende Expansionsachse (4a) die Buchse (4) und die äußere Welle (101) gegenseitig zu halten und die eine hervorstehende Rippe (60) umfassen, die sich im Gebrauch quer zu dieser vorherrschenden Expansionsachse (4a) erstreckt, und einen Schlitz (61), der sich zumindest teilweise quer zu dieser vorherrschenden Expansionsachse (4a) erstreckt und so konfiguriert ist, um diese Rippe (60) aufzunehmen, wobei die Rippe (60) an einer zwischen der Buchse (4) und der äußeren Welle (101) gehalten ist und der Schlitz (61) an der anderen zwischen der Welle (3) und der Buchse (4) angeordnet ist.

9. Motor-Pumpen-Gruppe gemäß mindestens den Ansprüchen 3 und 8, wobei die zweite Wand (42) diesen Schlitz (61) umfasst und die äußere Welle (101) diese Rippe (60) umfasst, wobei der Schlitz (61) von der Öffnung (21) zugänglich ist, wenn die Buchse (4) verwendet wird.

## Revendications

1. Moteur à arbre creux (1) comprenant :
- un corps principal (2) définissant un axe central (2a) et incluant une face externe (20) transversale audit axe central (2a) définissant centralement une ouverture (21),
- un arbre (3) s'étendant le long dudit axe central (2a) à l'intérieur dudit corps principal (2), tournant autour dudit axe central (2a) par rapport audit corps principal (2) et comprenant une première partie de couplage (3a) configurée pour être connectée à un arbre externe d'une pompe et une seconde partie de couplage (3b) configurée pour être connectée audit corps principal (2),
- un manchon (4) pouvant être accouplé à ladite première partie de couplage (3a), définissant un axe d'expansion prédominant (4a) et incluant au moins un logement (40) s'étendant le long dudit axe d'expansion prédominant (4a) et adapté pour loger ledit arbre externe de manière à transmettre, en utilisation, le mouvement dudit arbre (3) audit arbre externe,
- premiers moyens de contrainte (5) configurés pour contraindre réciproquement au moins en rotation autour dudit axe central (2a) ledit arbre (3) et ledit manchon (4) et comprenant une dent (50) saillant le long dudit axe central (2a) et une rainure (51) s'étendant au moins partiellement le long dudit axe central (2a) et configurée pour recevoir ladite dent (50), ladite dent (50) étant contrainte à, ou faisant partie de, l'un entre ledit arbre (3) et ledit manchon (4), et ladite rainure (51) étant disposée sur l'autre entre ledit arbre (3) et ledit manchon (4),
- ladite première partie de couplage (3a) incluant :
- une cavité (30) faisant face et accessible depuis ladite ouverture (21), développée principalement le long dudit axe central (2a) et configurée pour accueillir ledit manchon (4),
- au moins une première paroi (31) délimitant au moins une partie de ladite cavité (30) autour dudit axe (2a) et configurée pour empêcher la translation réciproque dudit manchon (4) par rapport audit arbre (3) transversalement audit axe central (2a),
et ledit moteur (1) étant **caractérisé en ce que**
- ledit manchon (4) comprend une paroi de base (41) transversale audit axe d'expansion prédominant (4a) et comprenant ladite dent (50) et ledit arbre (3) définit une paroi de fond (32) transversale audit axe central (2a), délimitant ladite cavité (30) avec ladite première paroi (31) et comprenant ladite rainure (51), ladite rainure (51) étant au moins partiellement contreformée à ladite dent (50).

2. Moteur à arbre creux (1) selon la revendication précédente, où ledit manchon (4) comprend un trou de couplage fileté (43), accessible depuis ledit logement (40) et s'étendant le long dudit axe d'expansion prédominant (4a).

3. Moteur à arbre creux (1) selon l'une quelconque des revendications précédentes, où ledit manchon (4) comprend au moins une seconde paroi (42) délimitant ledit logement (40) autour dudit axe d'expansion prédominant (4a) et contreformée à ladite première paroi (31).

4. Moteur à arbre creux (1) selon la revendication 3, où ladite seconde paroi (42) est revêtue extérieurement d'un revêtement (42a) de matériau métallique non ferreux.

5. Moteur à arbre creux (1) selon la revendication 3, où ladite seconde paroi (42) est revêtue extérieurement d'un revêtement (42a) de matériau polymère.

6. Moteur à arbre creux (1) selon la revendication 3, où ladite seconde paroi (42) comprend un trou traversant (42b) s'étendant transversalement audit axe d'expansion prédominant (4a) dans ladite seconde paroi (42) et adapté pour mettre en communication ledit logement (40) et ladite cavité (30) lorsque ledit manchon (4) est utilisé.

7. Moteur à arbre creux (1) selon la revendication 3, comprenant un fluide de lubrification interposé au moins entre ladite première paroi (31) et ladite seconde paroi (42).

8. Ensemble moteur-pompe comprenant un arbre creux (1) selon toute revendication précédente, une pompe (100) incluant un arbre externe (101) et seconds moyens de contrainte (6) configurés pour contraindre mutuellement au moins en rotation autour dudit axe d'expansion prédominant (4a) ledit manchon (4) et ledit arbre externe (101) et comprenant une ailette saillante (60), en utilisation, transversalement audit axe d'expansion prédominant (4a) et une fente (61) s'étendant au moins partiellement transversalement audit axe d'expansion prédominant (4a) et configurée pour recevoir ladite ailette (60), ladite ailette (60) étant contrainte à, ou faisant partie de, l'un entre ledit manchon (4) et ledit arbre externe (101) et ladite fente (61) étant disposée sur l'autre entre ledit arbre (3) et ledit manchon (4).

9. Ensemble moteur-pompe selon au moins les revendications 3 et 8, où ladite seconde paroi (42) comprend ladite fente (61) et ledit arbre externe (101) comprenant ladite ailette (60), ladite fente (61) étant accessible depuis ladite ouverture (21) lorsque ledit manchon (4) est utilisé.
